# EUROPÄISCHE PATENTSCHRIFT

(11) **EP 2 411 688 B1**
(45) Veröffentlichungstag und Bekanntmachung des Hinweises auf die Patenterteilung: **06.03.2013**
(21) Anmeldenummer: 10708731.4
(22) Anmeldetag: 11.03.2010
(51) Int. Cl.: F16C 17/22, F16C 33/04, F16J 15/34, F04D 29/046

(54) **THERMISCH ENTKOPPELTE LAGERANORDNUNG**
THERMALLY DECOUPLED BEARING ARRANGEMENT
AGENCEMENT DE PALIER DECOUPLE THERMIQUEMENT

(30) Priorität: 25.03.2009 DE 202009004160 U
(43) Veröffentlichungstag der Anmeldung: 01.02.2012
(73) Patentinhaber: EagleBurgmann Germany GmbH & Co. KG, 82515 Wolfratshausen (DE)
(72) Erfinder: PFEIL, Dieter, 82547 Eurasburg (DE); SCHERER, Hans-Georg, 82538 Geretsried (DE); RAUH, Gisela, 82538 Eurasburg (DE)
(74) Vertreter: Schaeberle, Steffen
(86) Internationale Anmeldenummer: PCT/EP2010/001541
(87) Internationale Veröffentlichungsnummer: WO 2010/108603

(56) Entgegenhaltungen:
- EP-A1- 0 771 956
- EP-A2- 0 118 056
- EP-A2- 0 563 437
- DE-A1- 2 636 507
- DE-C1- 10 061 049

## Beschreibung

Die Erfindung betrifft eine Lageranordnung zur Lagerung einer Welle, welche aus Bauteilen mit unterschiedlichen Wärmeausdehnungskoeffizienten hergestellt ist, wobei die Lageranordnung eine thermische Entkoppelung umfasst.

Lageranordnungen sind aus dem Stand der Technik in unterschiedlichen Ausgestaltungen bekannt. Insbesondere bei Gleitlagern ist es häufig erwünscht, dass eine Lagerschale des Gleitlagers zur Verringerung des Verschleißes aus einem verschleißfesten Material, z.B. einem keramischen Material, hergestellt ist. Beim Zusammenwirken einer derartigen Lagerschale mit einer Welle, welche z.B. aus einem Stahlmaterial hergestellt ist, können Probleme infolge des um ein Vielfaches höheren Wärmeausdehnungskoeffizienten von Stahl gegenüber dem keramischen Material auftreten. Dies kann zu Beschädigungen an der Lageranordnung führen.

Aus der EP 0 563 437 A2 ist eine Lageranordnung bekannt, bei der eine keramische Lagerbuchse gegenüber einer Welle an einem Außenumfang der Buchse mittels einer Widerlageranordnung zentrierend abgestützt ist. Diese Lageranordnung hat sich grundsätzlich bewährt und wird beispielsweise bei Kreiselpumpen verwendet. In jüngster Zeit werden jedoch erhöhte Anforderungen an die Tragfähigkeit gefordert und insbesondere die Wellendurchmesser aufgrund von starker Nachfrage nach größeren Anlagen vergrößert. Weiter kommt es zu einem vermehrten Einsatz von drehzahlgeregelten Maschinen, so dass sich durch Drehzahlregelung verschiedene Betriebspunkte mit unterschiedlicher Wärmeerzeugung ergeben. Hierdurch ist es nicht möglich, die Lageranordnung auf nur genau einen Betriebspunkt auszulegen.

Es ist daher Aufgabe der vorliegenden Erfindung, eine Lageranordnung bereitzustellen, welche bei einfachem Aufbau und einfacher, kostengünstiger Herstellbarkeit einen sicheren Betrieb auch bei ständigen Drehzahländerungen einer Welle sicherzustellen.

Diese Aufgabe wird durch eine Lageranordnung mit den Merkmalen des Anspruchs 1 gelöst. Die Unteransprüche haben vorteilhafte Weiterbildungen der Erfindung zum Gegenstand.

Die erfindungsgemäße Lageranordnung mit den Merkmalen des Anspruchs 1 weist den Vorteil auf, dass sie eine thermische Entkopplung am Lager ermöglicht, so dass die Einzelteile der Lageranordnung aus Materialien mit verschiedenen Wärmeausdehnungskoeffizienten herstellbar sind. Dadurch können die Materialien für die einzelnen Bauteile optimal an die jeweiligen Anforderungen angepasst werden. Erfindungsgemäß kann ferner ein Aufbau der Lageranordnung sehr einfach und kostengünstig sein. Dies wird erfindungsgemäß dadurch erreicht, dass ein Bandelement auf einem äußeren Umfang eines rotierenden Lagerrings aufgeschrumpft ist, so dass zwischen dem Bandelement und rotierendem Lagerring eine Schrumpfverbindung vorhanden ist. Somit bildet der rotierende Lagerring mit dem aufgeschrumpften Bandelement ein Verbundelement, welches mit zentrierendem Passsitz in eine Ausnehmung eines Halterings eingefügt ist. Erfindungsgemäß wird unter einem zentrierenden Passsitz eine Passung verstanden, welche kein Spiel oder ein geringfügiges Spiel im µm-Bereich aufweist. Es darf somit keine Presspassung vorliegen. Das Verbundelement kann somit von Hand in die Ausnehmung des Halterings eingelegt und entnommen werden. Das Bandelement ist mittels einer Axialverbindung mit dem Haltering verbunden. Das Verbundelement wird dabei in radialer Richtung zumindest teilweise vom Halteelement umschlossen, wobei aufgrund der mit zentrierendem Passsitz ausgeführten Einfügung des Verbundelements in das Halteelement die thermische Entkopplung zwischen Verbundelement und Halteelement möglich ist. Ein stationärer Lagerring und der rotierende Lagerring bilden dabei ein Axialgleitlager. Somit können erfindungsgemäß unerwünschte Veränderungen der Laufflächenpositionen am Axialgleitlager aufgrund von thermischen Änderungen kompensiert werden. Hierdurch kann eine Schädigung der Laufflächen durch sogenannten Kantenläufer verhindert werden.

Besonders bevorzugt weist der stationäre Lagerring zusätzlich noch eine radial nach innen gerichtete Gleitfläche auf, um zusammen mit einer Lagerbuchse, welche die Welle umgibt, ein Radialgleitlager zu bilden. Hierdurch kann gleichzeitig ein Radialgleitlager und ein Axialgleitlager am stationären Lagerring vorgesehen werden. Durch diese Mehrflächenlagerung am stationären Lagerring kann insbesondere die Bauteileanzahl reduziert und eine besonders kompakte Lageranordnung bereitgestellt werden.

Besonders bevorzugt ist das Bandelement symmetrisch zu einer senkrecht zu einer Mittelachse der Welle angeordneten Achse ausgebildet. Hierdurch wird sichergestellt, dass eine gleichmäßige Änderung von Maßen bei auftretenden Temperaturänderungen am Bandelement auftreten. Das Bandelement weist dabei besonders bevorzugt eine große Fase an den beiden radial nach außen gerichteten Kantenbereichen auf.

Besonders bevorzugt ist die Lageranordnung als Doppellageranordnung ausgebildet und umfasst somit zwei rotierende und zwei stationäre Lagerringe. Hierdurch kann die Welle an zwei voneinander beabstandeten Bereichen gelagert werden. Vorzugsweise sind die rotierenden Lagerringe dabei an in Axialrichtung zueinander gerichteten Seiten der stationären Lagerringe angeordnet. Mit anderen. Worten, sind in Axialrichtung die rotierenden Lagerringe zwischen den stationären Lagerringen angeordnet. Alternativ sind die rotierenden Lagerringe in Axialrichtung an voneinander abgewandten Seiten der stationären Lagerringe angeordnet. Mit anderen Worten sind die stationären Lagerringe in Axialrichtung zwischen den rotierenden Lagerringen angeordnet.

Ferner betrifft die vorliegende Erfindung eine Magnetkupplung mit einer erfindungsgemäßen Lageranordnung. Magnetkupplungen werden dabei besonders bevorzugt in drehzahlgeregelten Maschinen, insbesondere in Pumpen, verwendet.

Nachfolgend wird die vorliegende Erfindung anhand von bevorzugten Ausführungsbeispielen in Verbindung mit der begleitenden Zeichnung im Detail beschrieben. In der Zeichnung ist:
- Fig. 1: eine schematische Schnittansicht einer Lageranordnung gemäß einem ersten Ausführungsbeispiel der Erfindung,
- Fig. 2: eine schematische Schnittansicht einer Verbindungsanordnung von Fig. 1,
- Fig. 3: eine schematische Schnittansicht einer Kreiselpumpe, welche eine Lageranordnung nach Fig. 1 verwendet, und
- Fig. 4: eine schematische Schnittansicht einer Lageranordnung gemäß einem zweiten Ausführungsbeispiel.

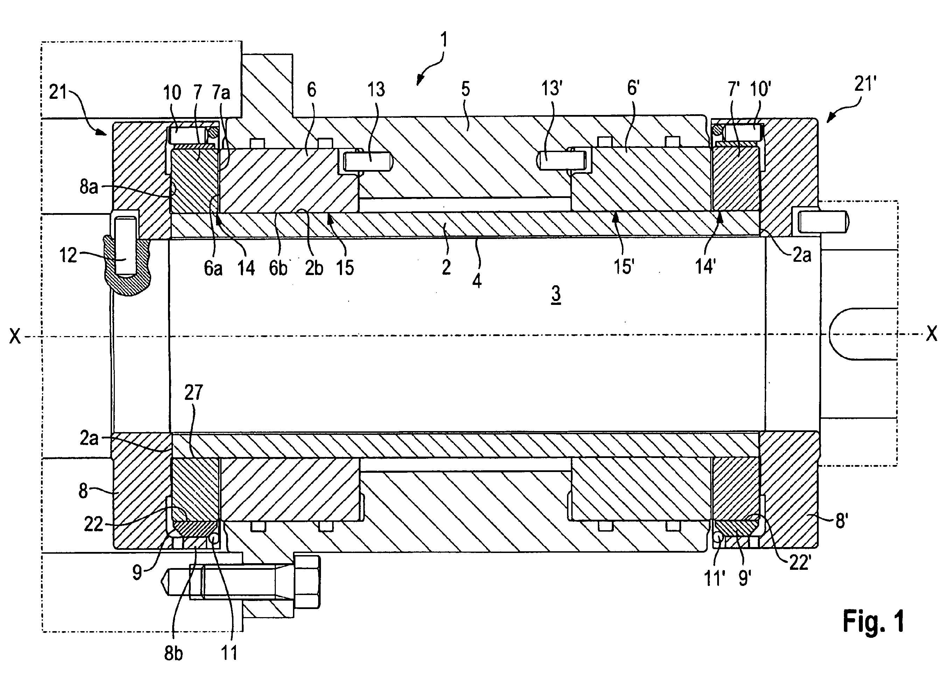

Nachfolgend wird unter Bezugnahme auf die Fig. 1 bis 3 eine Lageranordnung 1 gemäß einem ersten Ausführungsbeispiel der Erfindung im Detail beschrieben. Wie aus Fig. 1 ersichtlich ist, umfasst die Lageranordnung 1 eine zylinderförmige Lagerbuchse 2, in welcher eine Welle 3 angeordnet ist. Zwischen der Lagerbuchse 2 und der Welle 3 ist ein Ringspalt 4 vorgesehen, so dass zwischen der Lagerbuchse 2 und der Welle 3 ein radialer Abstand vorhanden ist. Die Größe des Ringspalts 4 wird dabei derart gewählt, dass ein Wärmedehnungsverhalten der Welle 3 berücksichtigt ist, da die Welle 3 und die Lagerbuchse 2 aus verschiedenen Materialien hergestellt sind. Im vorliegenden Ausführungsbeispiel sind die Welle 3 aus einem Stahlmaterial und die Lagerbuchse aus einem keramischen Material (SiC) hergestellt.

Die Lageranordnung 1 des gezeigten Ausführungsbeispiels dient gleichzeitig zur axialen wie auch radialen Lagerung der Welle 3. Hierbei ist die Lageranordnung 1 ferner als Doppellager vorgesehen, um die Welle 3 an zwei voneinander beabstandeten Bereichen zu lagern. Hierzu weist die Lageranordnung ein Paar von Axialgleitlagern 14, 14' und ein Paar von Radialgleitlagern 15, 15' auf. Die Axialgleitlager 14, 14' umfassen jeweils einen rotierenden Lagerring 7, 7' sowie einen stationären Lagerring 6, 6'. Die Radialgleitlager 15, 15' sind in Radialrichtung der Welle zwischen dem stationären Lagerring 6, 6' und einem Außenmantel 2b der Lagerbuchse 2 gebildet. Wie aus Fig. 1 ersichtlich ist, sind die beiden stationären Lagerringe 6, 6' an einem Gehäuseteil 5 mittels Stiften 13, 13' befestigt.

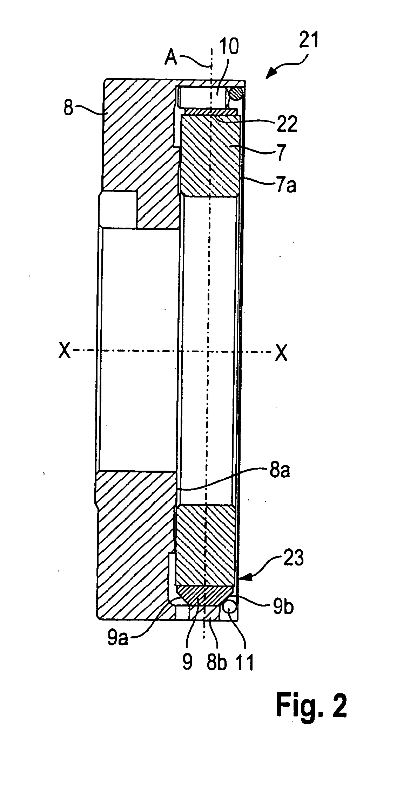

Die Welle 3 ist mit der Lagerbuchse 2 an den beiden einander entgegengesetzten Enden der Lagerbuchse 2 über Verbindungs- bzw. Zentrieranordnungen 21, 21' verbunden. Die Verbindungsanordnungen 21, 21' dienen zur konzentrischen Positionierung der Lagerbuchse 2 relativ zur Welle 3. Jede der Verbindungsanordnungen 21, 21' umfasst ein ringförmiges Halteelement 8, 8', welche mittels Stiften 12 mit der Welle 3 verbunden sind. Ferner sind auch die rotierenden Lagerringe 7, 7' Teil der Verbindungsanordnungen 21, 21'. Wie insbesondere aus Fig. 2 ersichtlich ist, umfassen die Verbindungsanordnungen 21, 21' ferner auch ein zusätzliches Bandringelement 9, 9'. Das Bandringelement 9, 9' ist dabei symmetrisch zu einer Achse A gebildet, wobei die Achse A senkrecht zu einer Mittelachse bzw. Rotationsachse X-X der Welle 3 ist. Das Bandringelement 9, 9' ist aus einem metallischen Material und ist jeweils auf die rotierenden Lagerringe 7, 7', welche aus einem keramischen Material hergestellt sind, mittels einer Schrumpfverbindung 22, 22' aufgeschrumpft. Somit bilden die rotierenden Lagerringe 7, 7' und die Bandringelemente 9, 9' jeweils ein Verbundelement 23 (Fig. 2). Über einen Befestigungsstift 10, 10' ist dabei das Bandringelement 9, 9' in Axialrichtung mit dem ringförmigen Halteelement 8, 8' verbunden. Wie aus Fig. 2 ersichtlich ist, weist das ringförmige Halteelement 8 eine Ausnehmung 8a auf, welche durch einen ringförmigen Randbereich 8b radial nach außen begrenzt wird. Hierbei ist das Verbundelement 23, umfassend den rotierenden Lagerring 7 und das Bandringelement 9 mit zentrierendem Passsitz in die Ausnehmung 8a eingelegt und lediglich über den Befestigungsstift 10 in axialer Richtung mit dem ringförmigen Halteelement 8 verbunden. Somit wird die Rotation der Welle 3 über das ringförmige Halteelement 8, den Befestigungsstift 10 und das Bandringelement 9 auf den rotierenden Lagerring 7 übertragen. Der rotierende Lagerring 7 ist weiterhin an seinem inneren Umfangsbereich über eine Verbindung 27, insbesondere einen zentrierenden Passsitz, mit der Lagerbuchse 2 verbunden, wobei die Lagerbuchse 2 vorzugsweise in Axialrichtung zwischen den Halteelementen 8, 8' eingespannt ist. Somit ist die Lagerbuchse 2 zentrisch über die Verbindungsanordnung 21 an der Welle 3 zentriert, so dass die Welle 3 und die Lagerbuchse 2 problemlos aus Materialien mit verschiedenen Wärmeausdehnungskoeffizienten hergestellt werden können.

Das Bandringelement 9 weist ferner an seinen radial nach außen gerichteten Kantenbereichen große Fasen 9a, 9b auf, wobei diese ebenfalls symmetrisch zur Achse A gebildet sind. Dabei ist ferner zur Fixierung des Verbundelements 23 ein Sprengring 11 an der Fase 9b des Bandringelements 9 vorgesehen, der in einer Ausnehmung im Randbereich 8b gehalten ist.

Somit kann erfindungsgemäß eine thermische Entkoppelung zwischen den Bauteilen mit unterschiedlichen Wärmeausdehnungskoeffizienten erreicht werden. Hierbei ist neben der Welle 3 auch das ringförmige Halteelement 8 sowie das Bandringelement 9 aus einem metallischen Material hergestellt. Dagegen sind der rotierende Lagerring 7 und die Lagerbuchse 2 aus einem keramischen Material hergestellt. Somit reagiert der rotierende Lagerring 7 bei Temperaturänderungen nicht durch ein Verkippen, was zu den im Stand der Technik auftretenden Verschleißerscheinungen an den axialen Gleitflächen 7a, 6a des Axialgleitlagers 14, 14' führen kann. Änderungen des Spannungsprofils in der Schrumpfverbindung 22 zwischen dem Bandringelement 9 und dem rotierenden Lagerring 7 können durch das mit zentrierendem Passsitz eingelegte Verbundelement 23 ausgeglichen werden. Insbesondere durch die symmetrische Ausgestaltung des Bandringelements 9 zur Achse A tritt bei unterschiedlichen Temperaturausdehnungen der einzelnen Bauteile keine Verkippung des rotierenden Lagerrings 7 auf.

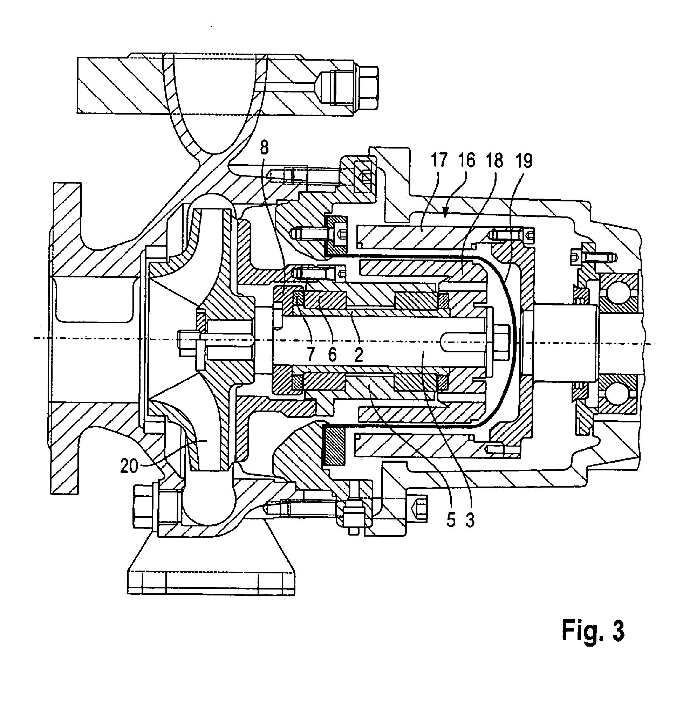

Fig. 3 zeigt die Verwendung der erfindungsgemäßen Lageranordnung 1 in einer Pumpe. Die Pumpe weist eine Magnetkupplung 16 auf, welche antreibende Magnete 17 und angetriebene Magnete 18 umfasst. Zwischen den antreibenden Magneten 17 und den angetriebenen Magneten 18 ist ein Spalttopf 19 vorgesehen. Die angetriebenen Magnete 18 sind dabei mit der Welle 3 verbunden. Ein Pumpenrad ist mit dem Bezugszeichen 20 gekennzeichnet. Die erfindungsgemäße Lageranordnung 1 übernimmt dabei sowohl die axiale als auch die radiale Lagerung der Welle 3, wobei an den stationären Lagerringen 6, 6' zwei Lagerflächen, nämlich eine Lagerfläche in Axialrichtung und eine Lagerfläche in Radialrichtung vorgesehen sind.

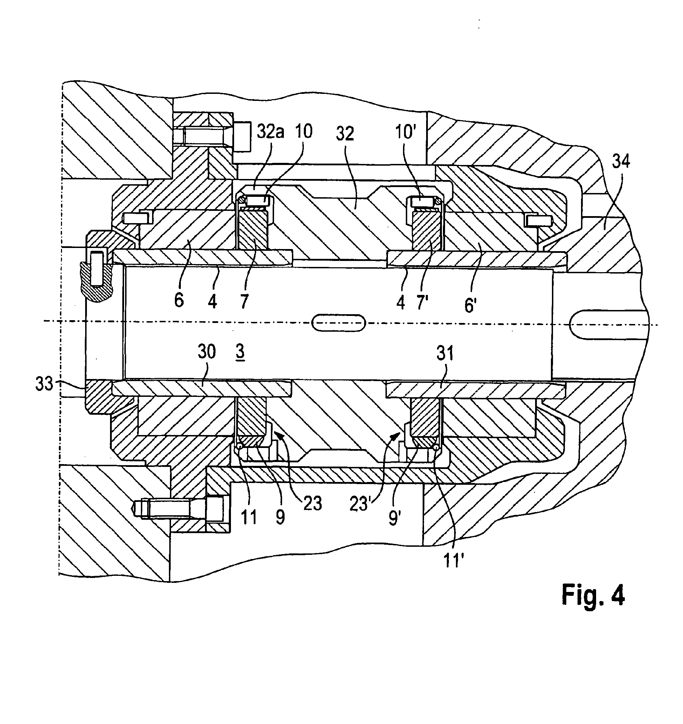

Fig. 4 zeigt eine Lageranordnung 1 gemäß einem zweiten Ausführungsbeispiel der Erfindung, wobei gleiche bzw. funktional gleiche Teile mit den gleichen Bezugszeichen wie im ersten Ausführungsbeispiel bezeichnet sind. Die Lageranordnung 1 des zweiten Ausführungsbeispiels entspricht im Wesentlichen dem ersten Ausführungsbeispiel, wobei im Unterschied zum ersten Ausführungsbeispiel eine Anordnung der statischen Lageringe 6, 6' zu den rotierenden Lagerringen 7, 7' umgekehrt ist. Beim zweiten Ausführungsbeispiel sind die rotierenden Lagerringe 7, 7' an einander in Axialrichtung abgewandten Seiten der stationären Lagerringe 6, 6' angeordnet. Ferner ist beim zweiten Ausführungsbeispiel keine durchgehende Lagerbuchse mehr vorgesehen, sondern es sind zwei separate Lagerbuchsen 30, 31 vorgesehen. Die beiden Lagerbuchsen 30, 31 sind über ein Zwischenelement 32 miteinander verbunden. Weiterhin ist die erste Lagerbuchse 30 über ein Halteelement 33 mit der Welle 3 verbunden und die zweite Lagerbuchse 31 ist über ein Halteelement 34 mit der Welle 3 verbunden. Die Bandelemente 9, 9' sind wieder auf die rotierenden Lagerringe 7, 7' aufgeschrumpft und mittels Befestigungsstiften 10, 10' fest mit dem Zwischenelement 32 in Axialrichtung verbunden. Hierbei sind die rotierenden Lagerringe 7, 7' sowie die beiden Lagerbuchsen 30, 31 wieder aus einem keramischen Material hergestellt und das Zwischenelement 32 und die beiden Halteelemente 33, 34 sowie die Welle 3 sind aus einem metallischen Material hergestellt, so dass diese Bauteile wieder unterschiedliche Wärmeausdehnungskoeffizienten aufweisen. Auch bei dieser Ausgestaltung bilden die rotierenden Lagerringe 7, 7' und die Bandringelemente 9, 9' über Schrumpfverbindungen jeweils ein Verbundelement 23, welche mit zentrierendem Passsitz in das Zwischenelement 32 eingelegt sind. Eine Verbindung des Verbundelements 23 zur Drehmomentübertragung erfolgt in axialer Richtung lediglich über die Befestigungsstifte 10, 10'. Ansonsten entspricht dieses Ausführungsbeispiel den vorhergehenden Ausführungsbeispielen, so dass auf die dort gegebene Beschreibung verwiesen werden kann.

## Patentansprüche

1. Lageranordnung zur Lagerung einer Welle (3), umfassend
- eine Lagerbuchse (2), in welcher die Welle (3) aufgenommen ist, wobei zwischen der Lagerbuchse (2) und der Welle (3) ein umlaufender Ringspalt (4) vorhanden ist, und wobei die Lagerbuchse (2) und die Welle (3) aus Materialien mit unterschiedlichen Wärmeausdehnungskoeffizienten hergestellt sind,
- eine Verbindungsanordnung (21), welche ein mit der Welle (3) verbundenes Halteelement (8; 32, 33, 34) und einen rotierenden Lagerring (7) umfasst, um eine zentrierende Abstützung der Lagerbuchse (2) an ihrem Außenumfang (2b) gegenüber der Welle (3) bereitzustellen,
- einen stationären Lagerring (6, 6') der radial außerhalb der Lagerbuchse (2) angeordnet ist, und mit dem rotierenden Lagerring (7, 7') ein Axialgleitlager (14) bildet,
**dadurch gekennzeichnet, dass**
- die Verbindungsanordnung (21) ein umlaufendes Bandringelement (9, 9') umfasst,
- wobei das Bandringelement (9, 9') mit dem rotierenden Lagerring (7, 7') mittels einer Schrumpfverbindung (22) verbunden ist, um ein Verbundelement (23) zu bilden, wobei das Verbundelement (23) mit zentrierendem Passsitz in einer Ausnehmung (8a; 32a) des Halteelements (8; 32) eingefügt ist,
- wobei der zentrierende Passsitz eine Passung ohne Spiel oder mit geringfügigem Spiel im µm-Bereich ist,
- wobei das Verbundelement (23) durch das Halteelement (8; 32) zumindest teilweise umschlossen ist, und
- wobei das Bandringelement (9, 9') mit dem Halteelement (8; 32) in Axialrichtung (X-X) der Welle (3) verbunden ist.

2. Lageranordnung nach Anspruch 1, **dadurch gekennzeichnet, dass** das Bandringelement (9, 9') symmetrisch zu einer Achse (A), die senkrecht zur Axialrichtung (X-X) der Welle (3) liegt, ist.

3. Lageranordnung nach Anspruch 1 oder 2, **dadurch gekennzeichnet, dass** die Lagerbuchse (2), der rotierende Lagerring (7, 7') und der stationäre Lagerring (6, 6') aus einem Material mit gleichem oder ähnlichem Wärmeausdehnungskoeffizienten, insbesondere aus SiC, hergestellt sind.

4. Lageranordnung nach einem der vorhergehenden Ansprüche, **dadurch gekennzeichnet, dass** das Halteelement (98; 32), die Welle (3) und das Bandringelement (9, 9') aus einem Material mit gleichem oder ähnlichem Wärmeausdehnungskoeffizienten, insbesondere aus Stahl, hergestellt sind.

5. Lageranordnung nach einem der vorhergehenden Ansprüche, **dadurch gekennzeichnet, dass** der stationäre Lagerring (6, 6') eine radiale Gleitfläche (6b) aufweist und mit einer radialen Gleitfläche (2b) der Lagerbuchse (2) ein Radialgleitlager (15) bildet.

6. Lageranordnung nach einem der vorhergehenden Ansprüche, **gekennzeichnet durch** zwei stationäre Lagerringe (6, 6') und zwei rotierende Lagerringe (7, 7') zur Bildung einer Doppellageranordnung.

7. Lageranordnung nach Anspruch 6, **dadurch gekennzeichnet, dass** die rotierenden Lagerringe (7, 7') an in Axialrichtung (X-X) einander zugewandten Seiten der stationären Lagerringe (6, 6') angeordnet sind oder dass die rotierenden Lagerringe (7, 7') an in Axialrichtung (X-X) einander abgewandten Seiten der stationären Lagerringe (6, 6') angeordnet sind.

8. Magnetkupplung, umfassend eine Lageranordnung nach einem der vorhergehenden Ansprüche.

## Claims

1. A bearing arrangement for supporting a shaft (3), comprising:
- a bushing (2) in which the shaft (3) is received, a circumferential ring gap (4) being present between the bushing (2) and the shaft (3), and the bushing (2) and the shaft (3) being made of materials having different thermal expansion coefficients;
- a connection arrangement (21) comprising a retaining element (8; 32) connected to the shaft (3) and a rotating bearing ring (7) in order to provide a centering support of the bushing (2) at the outer circumference (2b) thereof relative to the shaft (3);
- a stationary bearing ring (6, 6') that is disposed radially outside of the bushing (2) and forms an axial sliding bearing (14) with the rotating bearing ring (7, 7'),
**characterized in that**
- the connection arrangement (21) comprises a circumferential annular band element (9, 9'),
- wherein the annular band element (9, 9') is connected to the rotating bearing ring (7, 7') by means of a shrinkage connection (22) in order to form an interconnected element (23), wherein the interconnected element (23) is inserted in a recess (8a; 32a) of the retaining element (8; 32) with a centering snug fit,
- wherein the centering snug fit is a fit having no tolerance or a slight tolerance in the order of µm,
- wherein the interconnected element (23) is at least partially surrounded by the retaining element (8; 32), and
- wherein the annular band element (9, 9') is connected to the retaining element (8; 32) in the axial direction (X-X) of the shaft (3).

2. The bearing arrangement of claim 1, **characterized in that** the annular band element (9, 9') is symmetric with an axis (A) that is arranged perpendicular to the axial direction (X-X) of the shaft (3).

3. The bearing arrangement of claim 1 or 2, **characterized in that** the bushing (2), the rotating bearing ring (7, 7') and the stationary bearing ring (6, 6') are made of a material having the same or a similar thermal expansion coefficient, in particular are made of SiC.

4. The bearing arrangement of any of the preceding claims, **characterized in that** the retaining element (8; 32), the shaft (3) and the annular band element (9, 9') are made of a material having the same or a similar thermal expansion coefficient, in particular are made of steel.

5. The bearing arrangement of any of the preceding claims, **characterized in that** the stationary bearing ring (6, 6') has a radial sliding surface (6b) and forms a radial sliding bearing (15) together with a radial sliding surface (2b) of the bushing (2).

6. The bearing arrangement of any of the preceding claims, **characterized by** two stationary bearing rings (6, 6') and two rotating bearing rings (7, 7') for forming a twin bearing arrangement.

7. The bearing arrangement of claim 6, **characterized in that** the rotating bearing rings (7, 7') are arranged at sides of the stationary bearing rings (6, 6') facing each other in the axial direction (X-X), or that the rotating bearing rings (7, 7') are arranged at sides of the stationary bearing ring (6, 6') facing away from each other in the axial direction (X-X).

8. A magnetic coupling, comprising a bearing arrangement according to any of the preceding claims.

## Revendications

1. Agencement de palier destiné à soutenir un arbre (3), comprenant
- un coussinet (2) dans lequel l'arbre (3) est reçu, une fente annulaire circonférentielle (4) étant présente entre le coussinet (2) et l'arbre (3), et le coussinet (2) et l'arbre (3) étant fabriqués dans des matériaux ayant des coefficients de dilatation thermique différents,
- un agencement de liaison (21), qui comprend un élément de maintien (8 ; 32, 33, 34) relié à l'arbre (3) et une bague de palier rotative (7), pour fournir un appui centré du coussinet (2) sur sa circonférence extérieure (2b) par rapport à l'arbre (3),
- une bague de palier stationnaire (6, 6') qui est disposée radialement à l'extérieur du coussinet (2) et qui forme avec la bague de palier rotative (7, 7') un palier lisse axial (14),
**caractérisé en ce que**
- l'agencement de liaison (21) comprend un élément torique circonférentiel (9, 9')
- lequel élément torique (9, 9') est relié à la bague de palier rotative (7, 7') au moyen d'une liaison frettée (22) pour former un élément composite (23), l'élément composite (23) étant inséré avec ajustement centré dans un évidement (8a ; 32a) de l'élément de maintien (8 ; 32),
- l'ajustement centré étant un ajustement sans jeu ou avec un jeu minime de l'ordre du µm,
- l'élément composite (23) étant entouré au moins partiellement par l'élément de maintien (8 ; 32), et
- l'élément torique (9, 9') étant relié à l'élément de maintien (8 ; 32) dans la direction axiale (X-X) de l'arbre (3).

2. Agencement de palier selon la revendication 1, **caractérisé en ce que** l'élément torique (9, 9') est symétrique par rapport à un axe (A) qui s'étend perpendiculairement à la direction axiale (X-X) de l'arbre (3).

3. Agencement de palier selon la revendication 1 ou 2, **caractérisé en ce que** le coussinet (2), la bague de palier rotative (7, 7') et la bague de palier stationnaire (6, 6') sont fabriqués dans un matériau ayant un coefficient de dilatation thermique égal ou analogue, en particulier en SiC.

4. Agencement de palier selon une des revendications précédentes, **caractérisé en ce que** l'élément de maintien (8 ; 32), l'arbre (3) et l'élément torique (9, 9') sont fabriqués dans un matériau ayant un coefficient de dilatation thermique égal ou analogue, en particulier en acier.

5. Agencement de palier selon une des revendications précédentes, **caractérisé en ce que** la bague de palier stationnaire (6, 6') présente une surface de glissement radiale (6b) et forme, avec une surface de glissement radiale (2b) du coussinet (2), un palier lisse radial (15).

6. Agencement de palier selon une des revendications précédentes, **caractérisé par** deux bagues de palier stationnaires (6, 6') et deux bagues de palier rotatives (7, 7') pour former un agencement de palier double.

7. Agencement de palier selon la revendication 6, **caractérisé en ce que** les bagues de palier rotatives (7, 7') sont disposées sur des côtés des bagues de palier stationnaires (6, 6') tournés l'un vers l'autre dans la direction axiale (X-X) ou que les bagues de palier rotatives (7, 7') sont disposés sur des côtés des bagues de palier stationnaires (6, 6') éloignés l'un de l'autre dans la direction axiale (X-X).

8. Accouplement magnétique comprenant un agencement de palier selon une des revendications précédentes.
